# EUROPÄISCHE PATENTANMELDUNG

(11) **EP 1 193 615 A2**
(43) Veröffentlichungstag der Anmeldung: **03.04.2002**
(21) Anmeldenummer: 01122165.2
(22) Anmeldetag: 15.09.2001
(51) Int. Cl.: G06F 17/28

(54) **Elektronische Textübertragungsvorrichtung**

(30) Priorität: 28.09.2000 DE 10048069
(71) Anmelder: Global Language Communication Systems e.K., 28199 Bremen (DE)
(72) Erfinder: Cox, Gregg M.Dr., 27721 Ritterhude (DE); Grafelmann, Hans L., Prof. Dr., 28359 Bremen (DE)
(74) Vertreter: Andres, Mark (DE)

(57) **Zusammenfassung**

Die Erfindung betrifft eine elektronische Textübertragungsvorrichtung (2) mit einer elektronischen Textaufnahmevorrichtung (8, 34), die einen Text (68, 70), der in einer ersten Sprache geschrieben oder gesprochen ist, aufnimmt und in elektronische Daten umwandelt, einer elektronischen Datenübersetzungsvorrichtung, die in Datenleitungsverbindung (40) mit der Textaufnahmevorrichtung (34) steht und die einen Datenverarbeitungsprozessor (60) und ein in dem Prozessor (60) oder einem Datenspeicher gespeichertes Übersetzungsprogramm mit einer Datenbank (69, 74, 75) mit gespeicherten grammatikalischen und Vokabular-Informationen (Sprachregeln) über die erste und eine zweite Sprache aufweist und die die elektronischen Daten mittels des Prozessors (60) gemäß den Sprachregeln (69, 74, 75) in zweite elektronische Daten übersetzt, die den aufgenommenen Text in der zweiten Sprache repräsentieren, und mit einer elektronischen Textwiedergabevorrichtung (10, 44), die in Datenleitungsverbindung mit der Datenübersetzungsvorrichtung steht und die die zweiten elektronischen Daten als geschriebenen und/oder gesprochenen Text (80, 82) wiedergibt.

## Beschreibung

Die vorliegende Erfindung betrifft eine elektronische Textübertragungsvorrichtung.

Menschen benutzen Sprache zu ihrer Verständigung. Im Zuge der Globalisierung der menschlichen Gesellschaft wird es folglich immer bedeutungsvoller, sich fremder Sprachen bedienen zu können. Dies betrifft sowohl geschriebene als auch gesprochene Sprache, denn Kommunikation findet auf verschiedenen Wegen und in unterschiedlichen Kanälen statt, in denen beide Möglichkeiten ihre Rolle spielen. Das Sprachvermögen ist dabei sowohl passiv als auch aktiv erforderlich, denn selbstverständlich genügt es nicht, seinen Gesprächspartner zu verstehen, sondern man will nach Möglichkeit auch in der Lage sein, ihm in seiner Sprache zu antworten.

Bekannt sind Übersetzungsprogramme für Computer, die es einem Benutzer erlauben, einen Text aus einer Sprache in eine andere zu übersetzen. Hier ist durch das Programm festgelegt, aus welcher und in welche Sprache die Übersetzung vorgenommen wird, und dementsprechend ist das Programm üblicherweise in einer bestimmten dieser beiden Sprachen zu bedienen. Dabei muß der Text, der übersetzt werden soll, in einem für Computer üblichen Datenformat vorliegen und dem Computer eingegeben werden. Auch die Ausgabe erfolgt in einem für Computer üblichen Textformat.

Gemessen an den oben genannten Erfordernissen bei der Übertragung von Texten aus einer in eine andere Sprache ist die stark eingeschränkte Anwendbarkeit bekannter Übersetzungsprogramme erkennbar und läßt sich am einfachsten an einem extremen Beispiel verdeutlichen: ein japanischer und ein amerikanischer Geschäftspartner sind jeweils ohne Kenntnis von der Sprache des anderen, und sie möchten sich - zum Beispiel während eines gemeinsamen Abendessens - auch ohne Dolmetscher verständigen. Vorstellbar wäre hier zwar zunächst noch,sich eines bekannten Übersetzungsprogrammes auf einem Notebook zu bedienen, wenn man denn in der Lage ist, wirklich schnell zu "tippen". Aber spätestens dann, wenn nun der andere antworten möchte, nach dem er den in seine Sprache übersetzten Text auf dem Notebook gelesen hat, wird schon seine mangelnde Kenntnis von der Schrift, die bei der Beschriftung der Tastatur verwendet ist, ihn an der Benutzung des Notebooks seines Geschäftspartners hindern.

Der vorliegenden Erfindung liegt die Aufgabe zugrunde, eine elektronische Textübertragungsvorrichtung sowie ein elektronisches Textübertragungsverfahren zu schaffen, welche Textübertragung aus einer Sprache in eine andere flexibler ermöglichen.

Diese Aufgabe wird erfindungsgemäß durch eine Vorrichtung mit den in Anspruch 1 beschriebenen Merkmalen sowie durch ein Verfahren mit den in Anspruch 9 beschriebenen Merkmalen gelöst. Bevorzugte Ausgestaltungen der Erfindung sind in den Unteransprüchen angegeben.

Erfindungsgemäß hat eine elektronische Textübertragungsvorrichtung eine elektronischeTextaufnahmevorrichtung, eine elektronische Datenübersetzungsvorrichtung und eine elektronische Textwiedergabevorrichtung. Die Aufnahmevorrichtung nimmt Text, der in einer ersten Sprache geschrieben oder gesprochen ist, auf und gibt ihn, in erste elektronische Daten umgewandelt, weiter. Dies kann vorteilhaft mit oder in Echtzeit ohne Zwischenspeicherung der Daten erfolgen.

Dies hat gegenüber dem Stand der Technik insbesondere den Vorteil, dass sich mittels der erfindungsgemäßen Vorrichtung äußerst flexibel mittels nur einer spezifischen Vorrichtung Sprache übersetzen lässt, und zwar geschrieben oder gesprochen aufgenommen in eine geschriebene und/oder gesprochene Wiedergabe des zweiten vorzugsweise wählbaren Idioms.

Geeignete Aufnahmevorrichtungen sind hier vorzugsweise zur Aufnahme gesprochener Sprache ein Mikrofon und zur Aufnahme geschriebener Sprache ein Schrift-Scanner mit einem Schrifterkennungsprogramm, das in einem Prozessor oder einen Datenspeicher gespeichert ist und mittels des Prozessors die gescannte Schrift in elektronische Daten umwandelt. Aber auch eine Tastatur oder eine Datenleitungsschnittstelle sind erfindungsgemäße Aufnahmevorrichtungen, und die erfindungsgemäße Übertragungsvorrichtung kann eine beliebige Kombination von Aufnahmevorrichtungen aufweisen, um Aufnahmemöglichkeiten bereit zu stellen, die verschiedenen Benutzeranforderungen gerecht werden.

Auch die Wiedergabevorrichtung, die vorzugsweise einen Lautsprecher für die gesprochene Wiedergabe des übersetzten Textes und einen Bildschirm für die geschriebene Wiedergabe des übersetzten Textes sowie eine Datenleitungsschnittstelle aufweist, um den übersetzten Text z.B. an einen Drucker oder einen Datenspeicher weiterzuleiten, kann entsprechend unterschiedlicher Benutzeranforderungen erfindungsgemäß eine beliebige Kombination von Wiedergabevorrichtungen aufweisen.

Die Übersetzungsvorrichtung steht in Datenleitungsverbindung mit der Aufnahmevorrichtung, um die aufgenommenen ersten elektronischen Daten von dort zu übernehmen, und mit der Wiedergabevorrichtung, um nach der Übersetzung zweite elektronische Daten, welche den übersetzten Text repräsentieren, dorthin zur Wiedergabe weiterzuleiten. Die Übersetzungsvorrichtung weist einen Datenverarbeitungsprozessor und ein Übersetzungsprogramm auf, das in dem Prozessor oder einem Datenspeicher gespeichert ist. In einer Datenbank, die ebenfalls in der Übersetzungsvorrichtung gespeichert ist, sind grammatikalische und Vokabular-Informationen mindestens über eine erste Sprache, aus der übersetzt werden soll und über eine zweite Sprache, in die übersetzt werden soll, gespeichert. Mittels des Prozessors und des Übersetzungsprogramms übersetzt die Übersetzungsvorrichtung gemäß dieser grammatikalischen und Vokabular-Informationen, die hier zusammenfassend als "Sprachregeln" bezeichnet werden sollen, den aufgenommenen Text, in dem die Übersetzungsvorrichtung die ersten elektronischen Daten aus der Textaufnahmevorrichtung gemäß den Sprachregeln in die zweiten elektronischen Daten übersetzt.

Besonders bevorzugt weist hier die Datenbank des Übersetzungsprogramms Sprachregeln über mehr als zwei Sprachen auf, so dass die erfindungsgemäße Textübertragungsvorrichtung die Übersetzung vorteilhaft zwischen mehreren Sprachen, vorzugsweise wählbar, ermöglicht. Zur Auswahl der Sprachen hat die Übertragungsvorrichtung vorzugsweise eine Sprachwählvorrichtung, an der die Sprachen bevorzugt aus einem Katalog der verfügbaren Sprachen auswählbar sind. Dabei können die Sprachen in derselben Sprache und der dieser Sprache eigenen Schrift benannt sein sowie zusätzlich in der anderen Schrift und Sprache, die für die Übersetzung ausgewählt wurde. Auch eine Benennung der Sprachen mittels eindeutiger Codenummern ist erfindungsgemäß möglich. Als "Sprache" ist auch eine Aufgliederung in Dialekte - also zum Beispiel Hochdeutsch, Bayerisch und Plattdeutsch oder britisches und US-amerikanisches Englisch - zu verstehen.

Das erfindungsgemäße Verfahren zur automatischen Übertragung eines Textes aus einer ersten in eine zweite Sprache ist vorzugsweise mittels der erfindungsgemäßen Vorrichtung ausführbar, und daher wird bei dem erfindungsgemäßen Verfahren auch, dem bisher beschriebenen entsprechend, zunächst ein in einer ersten Sprache geschriebener oder gesprochener Text aufgenommen und in elektronische Daten umgewandelt. Der nun folgende Schritt der Übersetzung besteht erfindungsgemäß aus mehreren Einzelschritten und wird unter Verwendung von Tabellen ausgeführt, in denen Informationen über die erste und die zweite Sprache enthalten sind. Vorzugsweise geht dem der Schritt voran, aus einer Vielzahl von Tabellen über eine Vielzahl von Sprachen die beiden an der Übersetzung beteiligten Sprachen auszuwählen und die dazu verfügbaren Tabellen bereitzustellen.

Diese Tabellen enthalten erfindungsgemäß zunächst den Namen der Sprache vorzugsweise (wie oben beschrieben) als Codenummer sowie als namentliche Bezeichnung in der Sprache sowie vorzugsweise auch in allen anderen verfügbaren Sprachen (vorzugsweise zugeordnet der jeweiligen Sprachnamen-Codenummer zur einfacheren Erkennbarkeit. Des Weiteren enthalten die Tabellen die Worte der Sprache, denen jeweils eindeutige Bedeutungscodes, vorzugsweise Nummern, zugeordnet sind, wobei Worten mit gleichen Bedeutungen in den verschiedenen Tabellen der verschiedenen Sprachen gleiche Bedeutungscodes zugeordnet sind. Hierbei sind Mehrfachnennungen von Worten mit mehreren Bedeutungen erfindungsgemäß, denen jeweils ein anderer Bedeutungscode zugeordnet ist.

Im Übersetzungsschritt des erfindungsgemäßen Verfahrens nun werden die elektronischen Daten, die den in der ersten Sprache aufgenommenen Text repräsentieren, entsprechend der ersten Tabelle mit den-Informationen über die erste Sprache in Worte separiert, und für jedes Wort wird der Bedeutungscode aus der Tabelle ermittelt. In der Tabelle der zweiten Sprache wird gemäß dem Bedeutungscode das jeweils entsprechende Wort bestimmt und dann elektronisch gemäß der Reihenfolge und Satzaufteilung der Worte in dem in der ersten Sprache aufgenommenen Text aneinander gereiht. In einem nächsten Schritt der Übersetzung wird nun erfindungsgemäß jedes der in der zweiten Sprache angeordneten Worte in seiner grammatikalischen Form an die übrigen der angeordneten Worte desselben Satzes angepasst und zwar für jede Sprache entsprechend mindestens einer weiteren Tabelle, in der grammatikalische Zusammenhänge der Sprache verzeichnet sind. Die auf diese Weise grammatikalisch korrigierten Sätze, die als zweite elektronische Daten vorliegen, werden dann erfindungsgemäß elektronisch wiedergegeben, und zwar durch Umwandlung in geschriebenen und/oder gesprochenen Text.

Insbesondere für die Wiedergabe als gesprochener Text ist in den Tabellen jedem Wort ein Klangsignal zugeordnet, welches die sprachübliche Aussprache des Wortes repräsentiert.

Bei vielen Sprachen hängen gewisse grammatikalische Formen ihrer Worte davon ab, ob ihr Sprecher männlich oder weiblich ist. Wenn jemand zum Beispiel auf Spanisch mitteilen möchte, er sei müde, so sagt er "soy cansad**o**". Handelt es sich sich dagegen um einen weiblichen Sprecher, so sagt sie "soy cansad**a**". Eine falsche Benutzung dieser Formen kann für den Sprecher äußerst lächerlich und peinlich sein. Ähnliches gilt für sogenannte Höflichkeits- oder Formalformen. Im Deutschen ist hier die Verwendung der zweiten Person ("Du") als persönliche Anrede und die dritte Person ("Sie") als formelle Anrede evident. Die japanische Sprache kennt hier eine größere Anzahl von Graden der Höflichkeit, die sich insbesondere auf die Endungen der Verben auswirken. Weil sich diese grammatikalischen Abhängigkeiten, nämlich sowohl vom Geschlecht des Autors als auch vom Grad der Höflichkeit oder Förmlichkeit des Autors gegenüber einem Rezipienten nicht sicher aus dem Kontext der Sprache bestimmen lassen, aus der übersetzt wird (nämlich nur dann, wenn auch diese Sprache derartige Unterscheidungen trifft), weist die erfindungsgemäße Übertragungsvorrichtung vorzugsweise Eingabevorrichtungen auf, an denen sich das Geschlecht des Autors und/oder der Grad der Höflichkeit und/oder Förmlichkeit zwischen Autor und Rezipienten einstellen lässt. Damit diese Eingabevorrichtungen in beliebiger Sprache verständlich sind, sind die Wahlpositionen der Eingabevorrichtungen vorzugsweise von allgemein verständlichen Piktogrammen gekennzeichnet. Auch alle weiteren Bedienelemente der Vorrichtung sind vorzugsweise mit Piktogrammen beschriftet, wie zum Beispiel Tasten zur Auswahl der Ausgabe des übersetzten Textes gesprochen oder geschrieben. Das erfindungsgemäße Verfahren berücksichtigt die Auswahl des Geschlechts des Autors und des Grades der Höflichkeit oder Förmlichkeit vorzugsweise, indem entsprechend differenzierte Tabellen aufgerufen werden, die zum Beispiel dem deutschen Wort "müde" zunächst über die Entsprechung des Bedeutungscodes zunächst die männliche und die weibliche Form des spanischen Wortes zuordnen, um sich dann entsprechend dem eingegebenen Geschlecht des Autors zu der korrekten Form "cansado" oder "cansada" zu verzweigen.

Besonders vorteilhaft ermöglicht die erfindungsgemäße Vorrichtung die Übersetzung von Sprachen in einer großen Anzahl von Kombinationen der Idiome. Dabei ist die Vorrichtung vorzugsweise so ausgestaltet, dass sie von einem Benutzer bedienbar ist, ohne dass dieser eine bestimmte benutzerführende Sprache verstehen muss. Der Benutzer kann dabei den zu übersetzenden Text sprechen und schriftlich bereitstellen, und die Ausgabe der Übersetzung kann gesprochen und/oder schriftlich erfolgen. Hier ist vorzugsweise eine Teilung der erfindungsgemäßen Textübertragungsvorrichtung in zwei Vorrichtungseinheiten erfindungsgemäß, von denen die erste nur gesprochenen Text aufnimmt und wiedergibt und die zweite nur geschriebenen Text. Weil somit die erste Vorrichtungseinheit auf die sperrigeren Aufnahme- und Wiedergabevorrichtungen für geschriebenen Text, nämlich vorzugsweise Scanner und Bildschirm, verzichten kann und hier für gesprochenen Text nur Mikrofon und Lautsprecher benötigt, kann die erste Vorrichtungseinheit für gesprochenen Text äußerst kompakt ausgestaltet sein. Dies ist besonders vorteilhaft, denn gerade in einem Gespräch - das nicht notwendigerweise an einem Ort stattfinden muss, wo sich die Textübertragungsvorrichtung zum Beispiel auf einem Tisch ablegen lässt - ist eine kleine und leichte Ausgestaltung der Vorrichtung wenig störend und daher sehr vorteilhaft.

Die beiden Vorrichtungseinheiten lassen sich vorzugsweise kombinieren, so dass nach der Kombination über zusammenwirkende Verbindungsmittel Signalleitungen zwischen den Vorrichtungseinheiten hergestellt sind, die eine geschriebene Wiedergabe der Übersetzung eines gesprochenen Textes und eine gesprochene Wiedergabe der Übersetzung eines geschriebenen Textes erfindungsgemäß ermöglichen.

Die Erfindung wird im folgenden mit Bezug auf die beigefügten Zeichnungen beschrieben.
- Fig. 1: zeigt eine schematische Draufsicht auf eine erfindungsgemäße Textübertragungsvorrichtung,
- Fig. 2: zeigt eine Tabelle, in der erfindungsgemäß Codenummern für Sprachnamen verzeichnet sind und
- Fig. 3: zeigt ein Flussdiagramm eines erfindungsgemäßen Verfahrens zur Textübertragung.

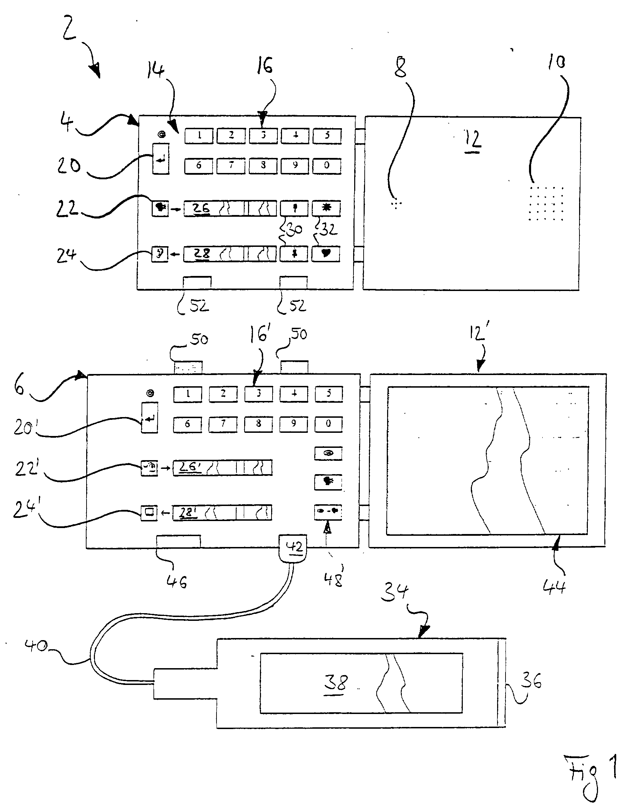

In Fig. 1 ist eine Textübertragungsvorrichtung 2 erkennbar. Sie weist eine erste Vorrichtungseinheit 4 und eine zweite Vorrichtungseinheit 6 auf. Die erste Vorrichtungseinheit 4 dient der Übersetzung eines gesprochenen Textes aus einer ersten in eine zweite Sprache. Der gesprochene Text wird mittels eines Mikrofons 8 der Vorrichtungseinheit 4 aufgenommen, und die Übersetzung wird mittels eines Lautsprechers 10 der Vorrichtungseinheit 4 gesprochen wiedergegeben. Das Mikrofon 8 und der Lautsprecher 10 sind auf der Innenseite eines Deckels 12 angeordnet, der in Fig. 1 aufgeklappt dargestellt ist und sich zum Schutz einer Tastatur 14 der ersten Vorrichtungseinheit 4 über die Tastatur 14 klappen lässt.

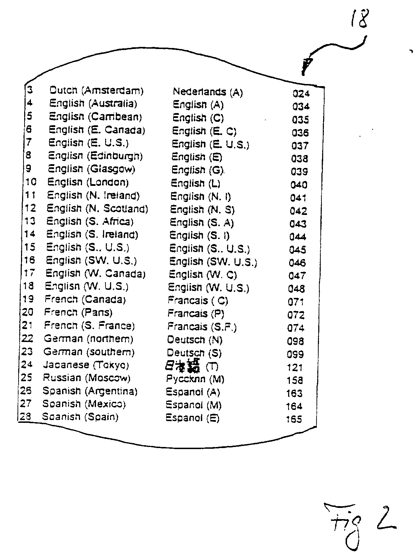

Die Tastatur 14 weist eine Sprachwählvorrichtung auf, die eine Nummerntastatur 16 umfasst zur Eingabe einer Sprachbezeichnungscodenummer 18 gemäß einer Tabelle, die in Fig. 2 dargestellt ist, sowie eine Eingabetaste 20 zur Bestätigung der Eingabe der Codenummer 18.

Des Weiteren umfasst die Sprachwählvorrichtung eine Aufnahmesprachen-Wahltaste 22 zum Signalisieren, dass der eingegebene Sprachbezeichnungscode 18 die Sprache bezeichnet, die mittels des Mikrofons 8 aufgenommen und übersetzt werden soll, sowie eine Ausgabesprachen-Wahltaste 24 zum Signalisieren, dass eine andere eingegebene Sprachbenennungscodenummer die Sprache bezeichnet, in die übersetzt werden soll und die dann mittels des Mikrofons 10 ausgegeben wird. Ein erstes Anzeigefenster 26 zeigt dementsprechend den Namen der ersten Sprache und den zugeordneten Benennungscode und ein zweites Anzeigefenster 28 den Namen der zweiten Sprache mit dem zugeordneten Benennungscode an.

An einem ersten Tastenpaar 30, bei dem eine Taste mit einem männlichen und eine Taste mit einem weiblichen Symbol beschriftet ist, lässt sich durch entsprechende Betätigung einstellen, ob es sich bei der ersten Sprache (dann wird zunächst, zusätzlich oder anschließend die Eingabesprachwahltaste 22 gedrückt) oder bei der zweiten Sprache (dann wird zunächst, zusätzlich oder anschließend die Sprachausgabewahltaste 24 gedrückt) um einen männlichen oder weiblichen Sprecher handelt. An einem zweiten Tastenpaar 32, bei dem eine Taste mit einem Herzsymbol als Piktogramm für "herzlich" oder "persönlich" markiert ist und die zweite Taste mit einem Stern-Symbol für "formell", lässt sich entsprechend für die erste und die zweite Sprache der Grad der Höflichkeit und/oder Förmlichkeit zwischen Sprecher und Rezipienten wählen.

Die zweite Vorrichtungseinheit 6 dient der Übersetzung von geschriebenem Text, der mittels eines Scanners 34 aufgenommen wird. Der Scanner 34 hat einen Lesekopf 36 zum Überstreichen des aufzunehmenden Textes sowie ein Display 38 zur Anzeige des aufgenommenen Textes und ist über eine Leitung 40 und einen Stecker 42 mit dem Gehäuse der zweiten Vorrichtungseinheit 6 verbunden.

Die zweite Vorrichtungseinheit 6 weist einen Bildschirm 44 auf zur Ausgabe der Übersetzung als geschriebener Text. Außerdem dient eine Druckerschnittstelle 46 als Wiedergabevorrichtung des übersetzten Textes. Der Bildschirm 44 ist in einem Deckel 1 2' angeordnet, der wie der Deckel 12 der ersten Vorrichtungseinheit 2 über eine Tastatur 16' der zweiten Vorrichtungseinheit 6 klappbar ist. Die Tastatur 16' der zweiten Vorrichtungseinheit 6 ist im wesentlichen ebenso aufgebaut wie die Tastatur 16 der ersten Vorrichtungseinheit 2. Der Übersicht halber sind das erste Tastenpaar 30 zur Wahl des Geschlechts des Sprechers und das zweite Tastenpaar 32 zur Wahl des Grades der Höflichkeit an der zweiten Vorrichtungseinheit 6 nicht dargestellt. Hier finden sich aber zusätzlich drei Tasten 48 zur Auswahl der Ausgabeart der Übersetzung: Eine der drei Tasten 48 ist mit einem Auge bezeichnet zur Auswahl ausschließlich geschriebener Wiedergabe der Übersetzung auf dem Bildschirm 44, eine zweite der drei Tasten 48 ist mit einem sprechenden Kopf bezeichnet zur Auswahl gesprochener Wiedergabe der Übersetzung über einen Lautsprecher (nicht sichtbar) auf der Rückseite des Deckels 12', und die dritte der drei Tasten 48 ist mit den beiden Symbolen gekennzeichnet zur Auswahl sowohl der geschriebenen als auch der gesprochenen Wiedergabe der Übersetzung.

Die erste Vorrichtungseinheit 2 und die zweite Vorrichtungseinheit 6 weisen jeweils Verbindungsmittel in Gestalt von zusammenwirkenden Steckern 50 und Buchsen 52 auf. Darüber lassen sich zwischen den Vorrichtungseinheiten 2 und 6 Leitungsverbindungen herstellen zur funktionalen Verknüpfung der beiden Vorrichtungen 2 und 6.

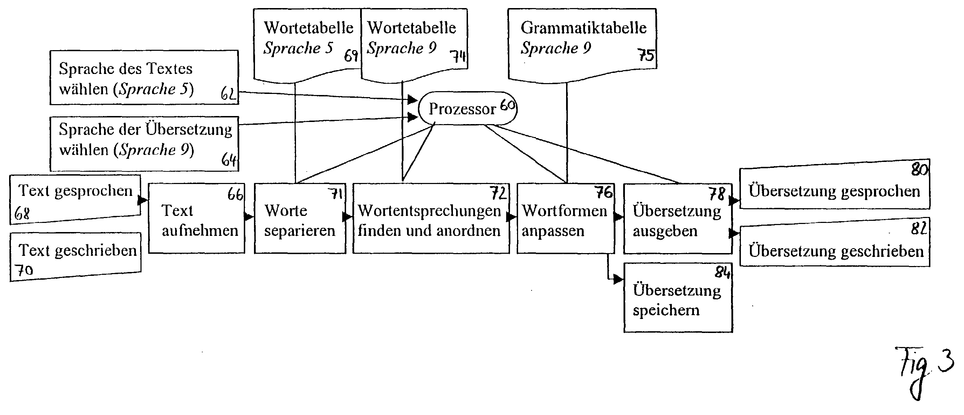

Fig. 3 zeigt als Flussdiagramm ein erfindungsgemäßes Verfahren zur automatischen Übertragung eines Textes aus einer ersten Sprache in eine zweite. Zunächst wird einem Datenverarbeitungsprozessor 60 mitgeteilt (62), aus welcher Sprache er einen folgenden Text übersetzen soll (im vorliegenden Beispiel eine Sprache mit der Codenummer 5), und anschließend (64), in welche Sprache die Übersetzung vorgenommen werden soll (hier beispielsweise Sprache Nr. 9). Anschließend wird ein zu übersetzender Text aufgenommen (66), und zwar im vorliegenden Beispiel ein gesprochener Text 68, wenngleich auch ein geschriebener Text 70 aufgenommen werden könnte.

Aufgrund der Bestimmung 62 der Sprache, aus der der Text übersetzt werden soll, stellt der Prozessor 60 eine Tabelle mit Informationen über diese Sprache aus dem Bestand der ihm durch Speicherung zur Verfügung stehenden verschiedenen Tabellen über die verschiedenen Sprachen, zu deren Übersetzung das Verfahren in der Lage ist, bereit und separiert nun (71) gemäß den Worten, die er in der Tabelle 69 findet, den aufgenommenen Text in einzelne Worte. In der Tabelle 69 sind nämlich die Worte der Sprache, in der der Text aufgenommen ist, enthalten sowie zusätzlich ein Bedeutungscode, der jeder Bedeutung eines Wortes der Sprache zugeordnet ist.

Gemäß dem Bedeutungscode nun ermittelt (72) der Prozessor 60 in ihrer Bedeutung entsprechende Worte der zweiten Sprache aus einer zweiten Tabelle 74, die sich der Prozessor entsprechend der anfänglichen Bestimmung 64 der Sprache, in die übersetzt werden soll, bereitgestellt hat. Diese in ihrer Bedeutung entsprechenden Worte der zweiten Sprache ordnet der Prozessor 60 dann satzweise gemäß der Reihenfolge der Worte in dem aufgenommenen Text 68 an.

Die so angeordneten Wortformen in der zweiten Sprache werden gemäß einer Grammatiktabelle 75 über die zweite Sprache, die dem Prozessor 60 ebenfalls gemäß der anfänglichen Information 64 über die Sprache, in die die Übersetzung erfolgen soll, bereitgestellt worden ist, grammatikalisch aneinander angepasst.

Der auf diese Weise erzeugte Satz wird nun in Echtzeit ausgegeben (78), das heißt, die Übersetzung eines Satzes wird gesprochen wiedergegeben (80), sobald die grammatikalische Anpassung 76 der Wortformen aneinander für einen Satz erfolgt ist. Gleichzeitig wird die Übersetzung auch, zum Beispiel auf einem Bildschirm 44 (Fig. 1) geschrieben wiedergegeben (82), und die Übersetzung wird gespeichert (84).

Da es sich in dem erfindungsgemäßen Verfahren gemäß Fig. 3 um ein elektronisches Datenverarbeitungsverfahren handelt, ist unter den "Worten" in den Schritten 70, 72 und 76 sowie in den Tabellen 69, 74 und 75 elektronische Daten zu verstehen, welche die Worte der jeweiligen Sprache repräsentieren. Dementsprechend umfasst auch die Aufnahme 66 des Textes die Umwandlung des Textes in die elektronischen Daten, und die Ausgabe 78 der Übersetzung umfasst auch die Rückumwandlung der elektronischen Daten zum Beispiel in Lautsprechersignale zur akustischen Wiedergabe 80.

## Patentansprüche

1. Elektronische Textübertragungsvorrichtung (2) mit
- einer elektronischen Textaufnahmevorrichtung (8, 34), die einen Text (68, 70), der in einer ersten Sprache geschrieben oder gesprochen ist, aufnimmt und in elektronische Daten umwandelt,
- einer elektronischen Datenübersetzungsvorrichtung, die in Datenleitungsverbindung (40) mit der Textaufnahmevorrichtung (34) steht und die einen Datenverarbeitungsprozessor (60) und ein in dem Prozessor (60) oder einem Datenspeicher gespeichertes Übersetzungsprogramm mit einer Datenbank (69, 74, 75) mit gespeicherten grammatikalischen und Vokabular-Informationen (Sprachregeln) über die erste und eine zweite Sprache aufweist und die die elektronischen Daten mittels des Prozessors (60) gemäß den Sprachregeln (69, 74, 75) in zweite elektronische Daten übersetzt, die den aufgenommenen Text in der zweiten Sprache repräsentieren, und mit
- einer elektronischen Textwiedergabevorrichtung (10, 44), die in Datenleitungsverbindung mit der Datenübersetzungsvorrichtung steht und die die zweiten elektronischen Daten als geschriebenen und/oder gesprochenen Text (80, 82) wiedergibt.

2. Textübertragungsvorrichtung nach Anspruch 1,
**dadurch gekennzeichnet, dass** die elektronische Aufnahmevorrichtung einen Schrift-Scanner (34) und einen Prozessor und ein in dem Prozessor oder einem Datenspeicher gespeichertes Schrifterkennungsprogramm aufweist und/oder ein Mikrofon (8) und/oder eine Tastatur (16) und/oder Dateneingangschnittstelle (52).

3. Textübertragungsvorrichtung nach einem der vorhergehenden Ansprüche,
**dadurch gekennzeichnet, dass** die elektronische Wiedergabevorrichtung einen Lautsprecher (10) und/oder einen Bildschirm (44) und/oder einen Drucker und/oder eine Datenausgang-Schnittstelle (46) aufweist.

4. Textübertragungsvorrichtung nach einem der vorhergehenden Ansprüche,
**dadurch gekennzeichnet, dass** die Datenbank (69, 74, 75) des Übersetzungsprogramms Sprachregeln über mehr als eine zweite Sprache aufweist und dass die Übersetzungsvorrichtung eine Sprachwählvorrichtung (16-28) aufweist zur Auswahl der zweiten Sprache.

5. Textübertragungsvorrichtung nach einem der vorhergehenden Ansprüche,
**dadurch gekennzeichnet, dass** die Sprachregeln (69, 74, 75) Abhängigkeiten aufweisen vom Geschlecht eines Autors der Sprache und dass die Übersetzungsvorrichtung eine Eingabevorrichtung (30) aufweist zur Eingabe des Geschlechts des Autors und dass die Übersetzungsvorrichtung diese Abhängigkeiten bei der Übersetzung aus der ersten und/oder in die zweite Sprache berücksichtigt.

6. Textübertragungsvorrichtung nach einem der vorhergehenden Ansprüche,
**dadurch gekennzeichnet, dass** die Sprachregeln (69, 74, 75) Abhängigkeiten aufweisen vom Grad der Höflichkeit und/oder Förmlichkeit des Autors gegenüber einem Rezipienten und dass die Übersetzungsvorrichtung eine Eingabevorrichtung (32) aufweist zur Eingabe des Grades der Höflichkeit und/oder Förmlichkeit und dass die Übersetzungsvorrichtung diese Abhängigkeiten bei der Übersetzung aus der ersten und/oder in die zweite Sprache berücksichtigt.

7. Textübertragungsvorrichtung nach Anspruch 6,
**dadurch gekennzeichnet, dass** der Grad wählbar ist zwischen "persönlich" und "formell".

8. Textübertragungsvorrichtung nach einem der vorhergehenden Ansprüche,
**dadurch gekennzeichnet, dass**
- eine erste Vorrichtungseinheit (2) aus einer ersten elektronischen Textaufnahmevorrichtung (8) für die gesprochene Sprache, einer ersten elektronischen Übersetzungsvorrichtung und einer ersten elektronischen Wiedergabevorrichtung (10) für die gesprochene Wiedergabe gebildet ist und dass
- eine zweite Vorrichtungseinheit (6) aus einer zweiten Textaufnahmevorrichtung (34) für die geschriebene Sprache, einer zweiten elektronischen Übersetzungsvorrichtung und einer zweiten elektronischen Wiedergabevorrichtung (44) für die schriftliche Wiedergabe gebildet ist und dass
- die erste Vorrichtungseinheit (4) und die zweite Vorrichtungseinheit (6) zusammenwirkende Verbindungsmittel (50, 52) für Signalleitungen aufweisen zur schriftlichen Wiedergabe der übersetzten, von der ersten Vorrichtungseinheit aufgenommenen gesprochenen Aufnahme mittels der zweiten Vorrichtungseinheit und/oder zur gesprochenen Wiedergabe der übersetzten, von der zweiten Vorrichtungseinheit aufgenommenen geschriebenen Aufnahme mittels ersten Vorrichtungseinheit.

9. Verfahren zur elektronischen Übertragung eines Textes (68, 70) aus einer ersten Sprache in eine zweite Sprache mit den Schritten:
- elektronisches Aufnehmen eines in einer ersten Sprache geschriebenen oder gesprochenen Textes (68, 70) als elektronische Daten,
- programmgesteuertes, elektronisches Separieren (71) der Daten in Worte des Textes gemäß einer ersten Tabelle (69), in der die Worte der ersten Sprache verzeichnet sind,
- programmgesteuertes, elektronisches Bestimmen eines Bedeutungscodes jedes der Worte des Textes (68, 70) gemäß der ersten Tabelle, in der zusätzlich jedem Wort der ersten Sprache der Bedeutungscode zugeordnet ist,
- für jedes der Worte des Textes (68, 70) programmgesteuertes, elektronisches Bestimmen (72) eines bedeutungsgleichen Wortes der zweiten Sprache gemäß einer zweiten Tabelle (74), in der jedem Wort der zweiten Sprache mit derselben Bedeutung wie in der ersten Tabelle derselbe Bedeutungscode zugeordnet ist,
- programmgesteuertes, elektronisches Anordnen (72) der aufgesuchten Worte der zweiten Sprache gemäß der Reihenfolge und Satzaufteilung der Worte in dem ersten Text (68, 70),
- programmgesteuertes, elektronisches Anpassen (76)dergrammatikalischen Form jedes der angeordneten Worte an die übrigen der angeordneten Worte desselben Satzes entsprechend mindestens einer Tabelle (75), in der grammatikalische Zusammenhänge der zweiten Sprache verzeichnet sind,
- elektronisches Wiedergeben (78) der elektronischen Daten, die den in der zweiten Sprache aus den angeordneten Worten gebildeten Satz repräsentieren, als geschriebenen oder gesprochenen Text (80, 82).

10. Verfahren nach Anspruch 9,
**dadurch gekennzeichnet, dass** die Schritte (66, 71, 72, 76, 78) in Echtzeit ohne Zwischenspeicherung der Daten ausgeführt werden.

11. Verfahren nach Anspruch 9 oder 10,
**dadurch gekennzeichnet, dass** in der ersten Tabelle (69) und/oder in der zweiten Tabelle (74) jedem Wort ein Klangsignal zugeordnet ist, welches die sprachübliche Aussprache des Wortes repräsentiert und dass das Klangsignal zur Wiedergabe (78) des gesprochenen Textes (80) verwendet wird.

12. Verfahren nach einem der Ansprüche 9 bis 11 unter Verwendung der Vorrichtung (2) nach einem der Ansprüche 1 bis 8.
